# EUROPÄISCHE PATENTSCHRIFT

(11) **EP 2 044 346 B1**
(45) Veröffentlichungstag und Bekanntmachung des Hinweises auf die Patenterteilung: **13.04.2011**
(21) Anmeldenummer: 07765697.3
(22) Anmeldetag: 28.06.2007
(51) Int. Cl.: F16H 7/12, F16H 7/18

(54) **ÖLGESCHMIERTER ZUGMITTELTRIEB EINER VERBRENNUNGSKRAFTMASCHINE**
OIL-LUBRICATED TRACTION MECHANISM DRIVE OF AN INTERNAL COMBUSTION ENGINE
MECANISME DE TRACTION LUBRIFIE A L'HUILE D'UN MOTEUR A COMBUSTION INTERNE

(30) Priorität: 18.07.2006 DE 102006033123
(43) Veröffentlichungstag der Anmeldung: 08.04.2009
(73) Patentinhaber: Schaeffler Technologies GmbH & Co. KG, 91074 Herzogenaurach (DE)
(72) Erfinder: PFLUG, Rainer, 91560 Heilsbronn (DE)
(86) Internationale Anmeldenummer: PCT/EP2007/056471
(87) Internationale Veröffentlichungsnummer: WO 2008/009544

(56) Entgegenhaltungen:
- WO-A-02/48562
- WO-A-2005/080770
- WO-A-2005/119088
- DE-A1- 3 434 428
- DE-A1- 10 202 817
- JP-A- 3 288 046
- JP-A- 3 288 047

## Beschreibung

### Gebiet der Erfindung

Die Erfindung betrifft einen ölgeschmierten Zugmitteltrieb einer Verbrennungskraftmaschine, umfassend ein Zugmittel, insbesondere einen Riemen und wenigstens ein Führungs- und Spannelement.

### Hintergrund der Erfindung

Ein solcher ölgeschmierter Zugmitteltrieb kommt bei einer Verbrennungskraftmaschine beispielsweise im Bereich der Triebkopplung der Nockenwellenräder und des Kurbelwellenrads zum Einsatz. Über die jeweiligen Räder läuft üblicherweise eine das Zugmittel bildende Kette. Der Trieb ist in einem geschlossenen Gehäuse angeordnet, in dem ein Ölreservoir vorgesehen ist, über das die Schmierung des gesamten Zuges erfolgt. Zur Führung bzw. Spannung der Kette kommen üblicherweise eine oder mehrere Kettenschienen zum Einsatz, auf der oder denen die Kette läuft. Die Kette selbst ist als Spezialbauteil von den Gestehungskosten her relativ teuer, ein Einsatz kostengünstigerer Riemen im Bereich ölgeschmierter Zugmitteltriebe ist jedoch bei Verwendung der die Zugmittelführung übernehmenden Schienen nicht möglich, da dort die Reibung zwischen Riemen und Schiene zu groß ist und es zu einem Verschleiß des Riemens kommt. Aus der WO 2005/119088 ist ein Zugmitteltrieb mit den Merkmalen des Oberbegriffes des Anspruchs 1 bekannt.

### Zusammenfassung der Erfindung

Der Erfindung liegt damit das Problem zugrunde, einen ölgeschmierten Zugmitteltrieb anzugeben, bei dem grundsätzlich auch der Einsatz eines Riemens als Zugmittel möglich ist.

Zur Lösung dieses Problems ist erfindungsgemäß vorgesehen, dass das Spann- oder Führungselement eine Rolle ist, die mittels eines fettgeschmierten Wälzlagers drehgelagert ist.

Bei dem erfindungsgemäßen ölgeschmierten Zugmitteltrieb wird als Spann- oder Führungselement eine Rolle verwendet. Es kommt also zu keiner bzw. nur zu einer vernachlässigbaren Reibung zwischen der Rolle und dem Riemen, weshalb die eingangs genannten Probleme hier nicht mehr auftreten. Nachdem sich, aus dem Einlaufen des Zugmitteltriebs resultierend, in den Ölkreislauf metallische Verunreinigungen ansammeln, die, wenn sie in das Wälzlager eindringen, dieses beschädigen und in seiner Lebensdauer deutlich verkürzen können, muss eine Vorkehrung getroffen werden, damit dies vermieden wird. Zu diesem Zweck ist die oder ist jede Rolle über ein fettgeschmiertes Wälzlager, das über eine oder mehrere berührende Dichtungen abgedichtet ist, drehgelagert. Es kommt also ein selbstschmierendes Wälzlager zum Einsatz, das zum Ölkreislauf hin abgedichtet ist, so dass ein Eindringen von Partikeln vermieden wird, wodurch sich eine Lebensdauerverbesserung des Wälzlagers erreichen lässt.

Bei sehr lang dauerndem Einsatz eines fettgeschmierten Wälzlagers, wie er bei Verwendung in einem ölgeschmierten Zugmitteltrieb zur Rollenlagerung beabsichtigt ist, kann es vorkommen, dass sich das Schmierfett verbraucht bzw. der Ölanteil im Schmierfett abnimmt. Gleichwohl befindet sich in der Wälzlagerumgebung infolge der Ölschmierung des Zugsmitteltriebs ein hinreichendes Ölvolumen. Um nun diesen Umstand zweckmäßig nutzen zu können, sieht die Erfindung vor, dass das Wälzlager über ein oder mehrere Dichtelemente nach außen abgedichtet ist, wobei das oder die Dichtelemente einen geringen Ölzufluss in das Lagerinnere erlauben. Die Dichtelemente, die als Schleifdichtungen mit jeweils wenigstens einer Dichtlippe ausgeführt sind, weisen zu diesem Zweck vorzugsweise im Bereich der Dichtlippe eine oder mehrere Öffnungen für den Öldurchtritt in das Lagerinnere auf. Diese Öffnungen ermöglichen also ein Eindringen des Öls in das Lagerinnere, so dass über das Öl das Schmierfett regeneriert werden kann. Die Größe dieser Öffnungen ist so gewählt, dass ein Eindringen etwaiger metallischer Partikel vermieden wird. Der Zufluss des Öls erfolgt über eine Kapillarwirkung dieser Öffnungen. Das heißt, die Öffnungsgröße ist sehr klein zu wählen. Im Übrigen ist ein minimaler Ölzufluss über die Zeit ausreichend, nachdem sich der Verbrauch des Schmierfetts über einen sehr langen Zeitraum erstreckt und eine kontinuierliche Regeneration über einen minimalen Ölzufluss ohne weiteres möglich ist. Dabei muss das Grundöl des Schmierfetts auf das Motorenöl bzw. das den Zugmitteltrieb schmierende Öl abgestimmt sein, damit es zu keinen Unverträglichkeitsreaktionen kommt bzw. die Regeneration des Schmierfetts über das Zugmittelschmieröl auch möglich ist.

### Kurze Beschreibung der Zeichnungen

Weitere Vorteile, Merkmale und Einzelheiten der Erfindung ergeben sich aus der nachfolgenden Beschreibung von Ausführungsbeispielen. Dabei zeigen:
- Fig. 1: eine Prinzipdarstellung eines erfindungsgemäßen ölgeschmierten Zug- mitteltriebs,
- Fig. 2: eine Querschnittsansicht durch einen Teil eines im erfindungsge- mäßen Zugmitteltrieb nach Fig. 1 zu verwendeten fettgeschmier- ten Wälzlagers, und
- Fig. 3: eine vergrößerte Prinzipdarstellung eines Teils eines Dichtelements des Wälzlagers aus Fig. 2.

### Detaillierte Beschreibung der Zeichnungen

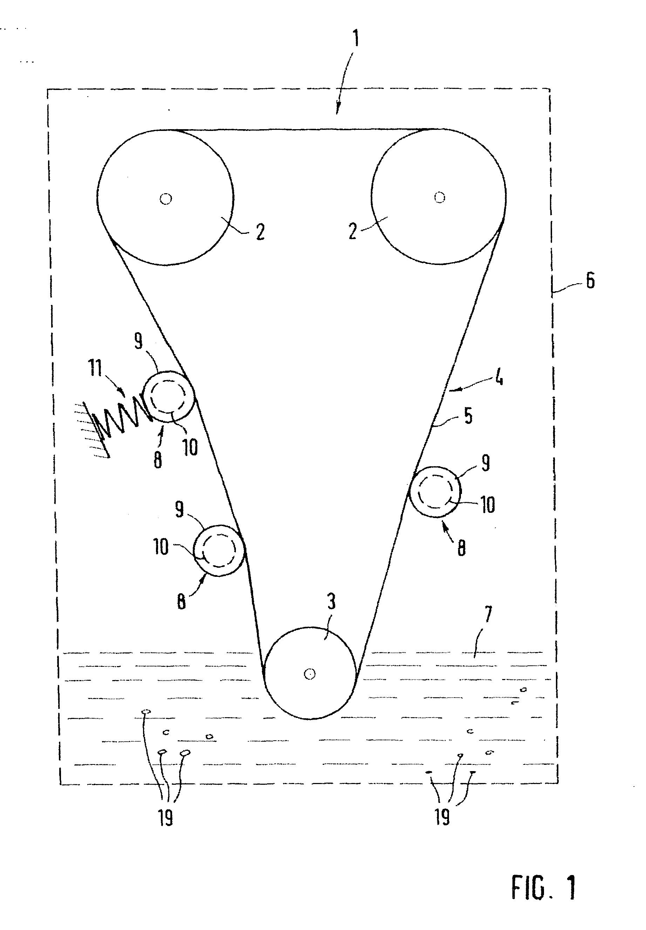

Fig. 1 zeigt in Form einer Prinzipdarstellung einen erfindungsgemäßen Zugmitteltrieb 1 einer Verbrennungskraftmaschine. Gezeigt sind hier exemplarisch zwei Nockenwellenräder 2 und ein Kurbelwellenrad 3, die im gezeigten Beispiel über ein Zugmittel 4, hier einen Riemen 5, gekoppelt sind. Der Zugmitteltrieb 1 ist ölgeschmiert, er befindet sich in einem hier nur gestrichelt und exemplarisch dargestellten Motorengehäuse 6, in dem ein Ölreservoir 7 vorgesehen ist, über das der gesamte Zug geschmiert wird.

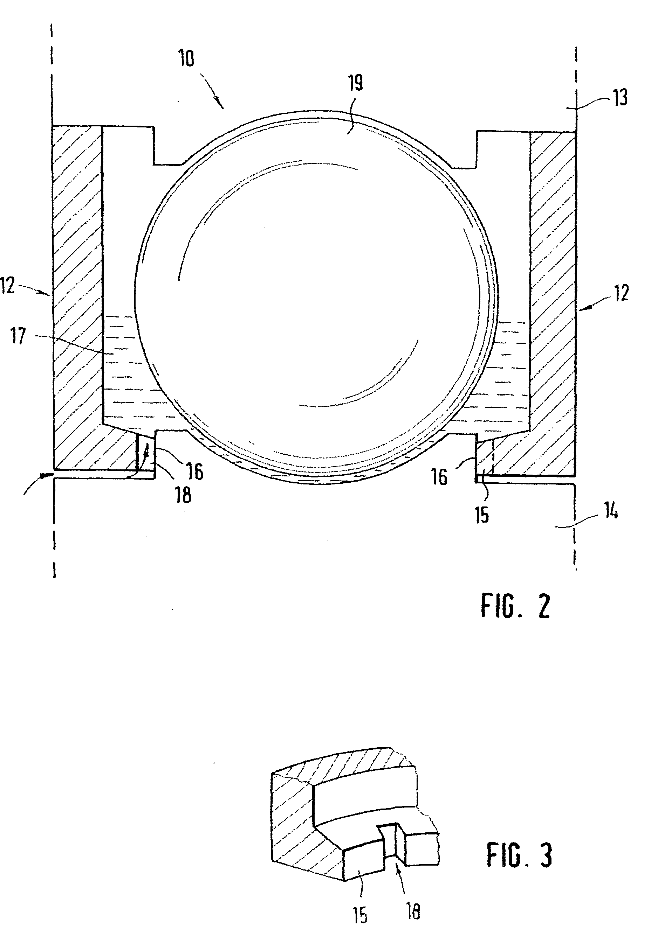

Der Riemen 5 ist im gezeigten Beispiel über drei Führungs- oder Spannelemente 8 geführt bzw. gespannt. Jedes der Spann- oder Führungselemente 8 ist als Rolle 9 ausgeführt, die jeweils über ein hier nur gestrichelt dargestelltes fettgeschmiertes und abgedichtetes Wälzlager 10 drehgelagert ist, worauf nachfolgend noch eingegangen wird. Über die Rollen 9 läuft der Riemen 5. Während den beiden unteren Rollen 9 lediglich eine Führungsfunktion zukommt, kommt im gezeigten Ausführungsbeispiel der oberen Rolle 9 gleichzeitig eine Spann- oder Nachstellfunktion zu. Diese ist, hier nur prinzipiell dargestellt, mit einem eine Rückstellkraft erzeugenden Element 11, beispielsweise einem Hydraulikspanner, bewegungsgekoppelt. Ein solches Element 11 ist jedoch lediglich optionaler Natur, es muss nicht zwangsläufig vorgesehen werden. Über dieses wird die Rolle 9 aktiv gegen den Riemen 5 gedrängt, so dass dieser stets eine gewisse Mindestspannung aufweist. Durch Verwendung der Rollen 9 im Zugmitteltrieb 1 mit dem Riemen 5 kann die Reibung zwischen dem Riemen 5 und den Spann- oder Führungselementen minimiert werden, so dass diese Reibung sich nicht nachteilig auf die Lebensdauer des Riemens auswirkt, anders als bei Verwendung starrer Schienen, über die der Riemen gleiten würde. Wie beschrieben, sind sämtliche Rollen 9 über fettgeschmierte Wälzlager 10 drehgelagert. Diese sind abgedichtet, wozu, siehe die Schnittdarstellung gemäß Fig. 2, zwei Dichtelemente 12 verwendet werden. Diese sind am Außenring 13 des Wälzlagers 10 befestigt, der wiederum mit der Rolle gekoppelt ist. Das heißt, der Außenring 13 samt Dichtelementen 12 dreht relativ zu dem feststehenden Innenring 14, zu dem die als Schleifdichtungen ausgeführten Dichtelemente 12 hin abdichten. Hierzu weisen die Dichtelemente jeweils eine Dichtlippe 15 auf, wie hier in Form der Prinzipskizze dargestellt ist. Diese Dichtlippe schleift axial an einem entsprechenden Dichtansatz 16 am Innenring 14 und bewirkt so die Abdichtung des Lagerinneren zum Lageräußeren. Im Lagerinneren befindet sich ein Fettreservoir 17, das hier nur exemplarisch angedeutet ist, und über das die Eigenschmierung des Wälzlagers bzw. der Kugeln 19 gewährleistet ist.

Um einem sich aus einem Langzeiteinsatz ergebenden Verbrauch des Schmierfetts im Lagerinneren entgegenzuwirken, sind die Dichtelemente 12 so ausgeführt, dass ein geringer Ölfluss von außen in das Lagerinnere möglich ist, d.h., es ist möglich, dass Öl aus dem Ölreservoir 7 in minimaler Menge über die Zeit in das Lagerinnere gelangen kann. Hierzu sind an den Dichtlippen 15, wie exemplarisch vergrößert in Fig. 3 dargestellt ist, kleine Öffnungen 18 in Form kleiner Ausnehmungen der Dichtlippe 15 vorgesehen, die einen Durchtritt des Öls, wie durch die Pfeile in Fig. 2 gezeigt, ermöglichen. Die Größe dieser Öffnungen 18 liegt im Bereich von weniger als 1 mm, sie beträgt bevorzugt wenige Zehntel mm. Hierdurch wird vermieden, dass über diese Öffnungen 18 etwaige im Reservoir befindliche Metallpartikel 19, die aus einem Abrieb der Metallkomponenten während der Einlaufphase stammen und sich im Ölreservoir ansammeln, in das Lagerinnere gelangen. Gleichwohl wird über die Kapillarwirkung dieser Öffnungen ein minimaler Ölzufluss gewährleistet. Es ist ausreichend, pro Dichtlippe wenigstens eine Öffnung vorzusehen, bevorzugt sind zwei Öffnungen an einander diametral gegenüberliegenden Positionen vorgesehen. Über diese Öffnungen kann gleichzeitig auch eine Lagerentlüftung realisiert werden, über die ein sich im Betrieb im Lagerinneren aufbauender etwaiger Überdruck nach außen abführen lässt. Durch diese Entlüftungsmöglichkeit wird weiterhin sichergestellt, dass die Dichtlippen während des Betriebs nicht durch Druckunterschiede zusätzlich belastet werden, was insgesamt zu einer geringeren Reibleistung des Wälzlagers und eine geringere Eigenerwärmung des Lagers führt, wodurch auch das eingesetzte Wälzlagerfett weniger thermisch belastet wird. Die Öffnungen haben somit eine Mehrfachfunktion. Zum einen dienen sie zur Ermöglichung eines Öleintritts in das Lagerinnere und gleichzeitig zur Filterung von metallischem Ölschmutz, der nicht in das Innere gelangen kann. Zum anderen dienen sie der Entlüftung.

An dieser Stelle ist darauf hinzuweisen, dass es sich bei den Ausgestaltungen gemäß den Figuren 1-3 lediglich um Prinzipdarstellungen handelt. Selbstverständlich ist es denkbar, die jeweiligen Dichtelemente auch als Radialdichtungen und nicht als die in Fig. 2 gezeigten Axialdichtungen auszuführen, d.h. bei diesen Radialdichtungen wäre die Dichtlippe radial gerichtet, die Öffnung würde dann an dieser radial ausgerichteten Dichtlippe vorzusehen sein.

Das Wälzlagerfett wird wie beschrieben durch das eindringende Öl, d.h. Ölnebel oder Spritzöl, regeneriert. Das heißt, das verbrauchte Öl aus dem Grundvorrat des Fettes wird durch das nachfließende Öl ersetzt. Hierzu ist es erforderlich, dass das Grundöl des Schmierfetts und das im Ölreservoir 7 befindliche Öl miteinander chemisch kompatibel sind.

### Bezugszahlen

- 1: Zugmitteltrieb
- 2: Nockenwellenrad
- 3: Kurbelwellenrad
- 4: Zugmittel
- 5: Riemen
- 6: Motorgehäuse
- 7: Ölreservoir
- 8: Spannelement
- 9: Rolle
- 10: Wälzlager
- 11: Federelement
- 12: Dichtelement
- 13: Außenring
- 14: Innenring
- 15: Dichtlippe
- 16: Dichtansatz
- 17: Fettreservoir
- 18: Öffnung
- 19: Metallpartikel

## Patentansprüche

1. Ölgeschmierter Zugmitteltrieb einer Verbrennungskraftmaschine, umfassend ein Zugmittel, insbesondere einen Riemen, und wenigstens ein Führungs- oder Spannelement mit einer zugehörigen Rolle (9), die mittels eines fettgeschmierten Wälzlagers (10) drehgelagert ist,
das Wälzlager (10) über ein oder mehrere Dichtelemente (12) nach außen abgedichtet ist, **dadurch gekennzeichnet, dass** das Dichtelement (12) oder die Dichtelemente Schleifdichtungen sind, die jeweils wenigstens eine Dichtlippe (15) mit einer oder mehreren.
Öffnungen (18) aufweisen, die einen geringen Ölfluss in das Lagerinnere erlauben.

## Claims

1. Oil-lubricated traction mechanism drive of an internal combustion engine, comprising a traction mechanism, in particular a belt, and at least one guiding or tensioning element with an associated roller (9) which is rotatably mounted by means of a grease-lubricated rolling bearing (10), the rolling bearing (10) being sealed off to the outside by means of one or more sealing elements (12), **characterized in that** the sealing element (12) or the sealing elements are sliding seals which have in each case at least one sealing lip (15) with one or more openings (18) which permit a small flow of oil into the bearing interior.

## Revendications

1. Entraînement à moyen de traction lubrifié à l'huile d'un moteur à combustion interne, comprenant un moyen de traction, notamment une courroie, et au moins un élément de guidage ou de tensionnement avec un galet associé (9), qui est monté sur palier rotatif au moyen d'un palier à roulement (10) lubrifié avec de la graisse, le palier à roulement (10) étant rendu étanche vis-à-vis de l'extérieur par le biais d'un ou de plusieurs éléments d'étanchéité (12), **caractérisé en ce que** l'élément d'étanchéité (12) ou les éléments d'étanchéité sont des joints d'étanchéité à friction qui présentent à chaque fois au moins une lèvre d'étanchéité (15) avec une ou plusieurs ouvertures (18) qui permettent un faible écoulement d'huile à l'intérieur du palier.
